# EUROPÄISCHE PATENTSCHRIFT

(11) **EP 2 675 586 B1**
(45) Veröffentlichungstag und Bekanntmachung des Hinweises auf die Patenterteilung: **10.06.2015**
(21) Anmeldenummer: 11797192.9
(22) Anmeldetag: 09.12.2011
(51) Int. Cl.: B23K 20/12

(54) **VERFAHREN ZUM FÜGEN VON WERKSTÜCKEN UNTER VERWENDUNG EINES FÜGEELEMENTES UND ERWÄRMUNG DES FÜGEELEMENTES UND DER WERKSTÜCKE**
METHOD FOR JOINING WORKPIECES BY USING A JOINING ELEMENT AND HEATING THE JOINING ELEMENT AND THE WORKPIECES
PROCÉDÉ D'ASSEMBLAGE DE PIÈCES À L'AIDE D'UN ÉLÉMENT D'ASSEMBLAGE ET CHAUFFAGE DE L'ÉLÉMENT D'ASSEMBLAGE ET DES PIÈCES

(30) Priorität: 14.12.2010 DE 102010054453
(43) Veröffentlichungstag der Anmeldung: 25.12.2013
(73) Patentinhaber: Hochschule Für Angewandte Wissenschaften - Fachhochschule Kempten, 87435 Kempten (DE)
(72) Erfinder: SCHINDELE, Paul, 87435 Kempten (DE)
(74) Vertreter: Hoefer & Partner
(86) Internationale Anmeldenummer: PCT/EP2011/006226
(87) Internationale Veröffentlichungsnummer: WO 2012/084140

(56) Entgegenhaltungen:
- WO-A1-99/39861
- DE-A1-102008 044 763
- GB-A- 2 270 864
- US-A1- 2003 042 292
- W. THOMAS ET AL: "FRICTION PROCESSES BENEFIT FROM A GAS SHIELD", WELDING AND METAL FABRICATION, IPC LTD. HAYWARDS HEATH, GB, Bd. 66, Nr. 4, 1. Mai 1998 (1998-05-01), XP000754997, ISSN: 0043-2245

## Beschreibung

Die Erfindung bezieht sich auf ein Verfahren zum Fügen von zumindest zwei Werkstücken gemäß dem Oberbegriff des Anspruchs 1 (siehe, z.B., GB 2 270 864), bei welchem auf den Bereich und/oder in den Bereich einer Fügestelle Material eines Fügeelements aufgebracht/eingebracht wird.

Der Stand der Technik zeigt zum Fügen von Werkstücken die unterschiedlichsten Vorgehensweisen. So sind beispielsweise Verbindungsschweißverfahren bekannt, bei welchen ein Schmelzschweißverfahren oder ein Pressschweißverfahren zur Anwendung gelangt.

Bei den Schmelzschweißverfahren wird in der Regel ein gemeinsames Schmelzbad zwischen den zu verbindenden Werkstücken und optional einem zugeführten Schweißzusatzwerkstoff erzeugt. Die Schweißverbindung kommt zustande, wenn das Schmelzbad erstarrt.

Bei den Schmelzschweißverfahren entsteht somit in der Schweißnaht ein Schmelz-Erstarrungsgefüge mit meist vom Grundwerkstoff abweichenden Materialeigenschaften. Weiterhin erweist sich ein Schmelzschweißen in Zwangslagen als negativ, da die Gefahr des Wegfließens des Schweißgutes aufgrund der Schwerkraft besteht. Die Zusatzwerkstoffe müssen in oft aufwendigen Verfahren als Elektroden hergestellt werden.

Für Pressschweißverfahren ist üblicherweise ein Erwärmen der beiden zu verbindenden Werkstücke auf Erweichungstemperatur sowie die Aufbringung einer Presskraft notwendig, welche die plastischen Bereiche der zu verbindenden Werkstücke ineinander presst.

Bei den Pressschweißverfahren gibt es meist eine Begrenzung auf bestimmte Werkstück- und Nahtgeometrien, wie etwa Überlappungen beim Punkt- und Rollennahtschweißen oder eine Rotationssymmetrie beim Rotationsreibschweißen. Es erweist sich als nachteilig, dass meist aufwendige Staucheinrichtungen für den Pressvorgang eingesetzt werden müssen. Fast immer entsteht ein Stauchwulst an den Werkstücken. Auch beim Reibrührschweißen gibt es eine Begrenzung auf bestimmte weichere Materialien und maximale Nahtstärken.

Aus der US 2003/042292 A1 ist ein Reibschweißverfahren bekannt, bei welchem ein Reibschweißwerkzeug verwendet wird, um eine Erwärmung des Schweißnahtbereiches durch Reibungswärme durchzuführen. Zusätzlich wird, unabhängig von dem Reibschweißwerkzeug, ein Füllmaterial in Form eines Drahtes zugeführt. Durch den Reibvorgang wird auch das Füllmaterial erwärmt, so dass die Ausbildung einer Schweißnaht möglich ist.

Aus der Veröffentlichung von W. Thomas et al: "FRICTION PROCESSES BENEFIT FROM A GAS SHIELD", WELDING AND METAL FABRICATION, IPC LTD. HAYWARDS HEATH, GB, Bd. 66, Nr. 4, 1. Mai 1998 (1998-05-01), XP000754997, ISSN: 0043-2245" ist ein konventionelles Reibschweißverfahren vorbekannt, bei wel-chem die Randbereiche der zu verschweißenden Werkstücke mittels eines Reibschweißwerkzeugs erwärmt werden. Zusätzlich wird die Aufbringung eines Schutzgases diskutiert.

Ein weiteres Reibschweißverfahren zeigt die WO 99/39861 A1. Dabei wird beschrieben, dass die benachbarten Bereiche der zu fügenden Werkstücke vor dem eigentlichen Reibschweißvorgang mittels einer Wärmequelle erwärmt werden.

Die DE 10 2008 044 763 A1 betrifft ein Reib-Beschichtungsverfahren, bei welchem die Oberfläche des zu beschichtenden Werkstücks vor Aufbringung des Beschichtungsmaterials erwärmt wird.

Der Erfindung liegt die Aufgabe zugrunde, ein Verfahren zum Fügen von zumindest zwei Werkstücken zu schaffen, welches bei einfachem Aufbau und einfacher, kostengünstiger Durchführbarkeit die Nachteile des Standes der Technik vermeidet und eine gute Fügeverbindung sicherstellt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die zu fügenden Werkstücke zunächst bereitgestellt und positioniert werden. Weiterhin wird zumindest ein Fügeelement bereitgestellt. Nachfolgend wird das Fügeelement auf eine im Wesentlichen seiner Plastifizierungstemperatur gleiche Temperatur erwärmt. Die Erwärmung erfolgt mittels zumindest einer Wärmequelle.

Erfindungsgemäß können unterschiedlichste Wärmequellen verwendet werden, deren Auswahl und Anwendung von dem jeweiligen Material des Fügeelements sowie von den Umgebungsparametern abhängt. So ist es möglich, das Fügeelement durch externe rotierende oder oszillierende Reibelemente oder Reibbacken zu erwärmen (Reibwärme). Es ist möglich, die Erwärmung durch eine Induktionserwärmung, durch eine Heizflamme, durch einen Lichtbogen, durch eine Widerstandserwärmung, durch Laserstrahlen, Elektronenstrahlen oder Heißgase, vorzunehmen. Auch eine Ultraschallerwärmung oder Schmorkontakte, wie sie aus dem Abbrennstumpfschweißen bekannt sind, können Anwendung finden.

Erfindungsgemäß ist weiterhin vorgesehen, dass die Werkstücke zumindest im Bereich der Fügestellen auf eine vorgegebene Reaktionstemperatur vorgewärmt werden. Zu der Erwärmung der Werkstücke können Wärmequellen wie oben stehend aufgelistet zur Anwendung kommen.

Nachfolgend wird erfindungsgemäß Material des Fügeelements auf den Bereich und/oder in den Bereich der Fügestelle aufgebracht/eingebracht, wobei dies unter einer Relativbewegung zwischen dem Fügeelement und dem Bereich der Fügestelle erfolgt. Durch die Relativbewegung wird eine Schweißnaht oder Schweißraupe erzeugt, es wird zumindest eine Lage des Materials des Fügeelements auf den Bereich und/oder in den Bereich der Fügestelle aufgebracht/eingebracht. Erfindungsgemäß erfolgt somit ein Aufquetschen oder Aufdrücken des Materials des Fügeelements. Hierbei kann es besonders günstig sein, wenn eine zusätzliche Pressschweißkraft aufgebracht wird bzw. das Fügeelement mit einem vorgegebenen Druck auf den Bereich der Fügestelle aufgepresst oder aufgequetscht wird.

Insbesondere bei metallischen Werkstoffen erfolgt, ähnlich einem Pressschweißvorgang, eine Verbindung der Gefügebereiche, insbesondere durch Diffusionsvorgänge oder durch Kristallwachstum. Auch Adhäsionsvorgänge und mechanische Verklammerungen können zur Verbindung beitragen.

Zur erfindungsgemäßen Erzeugung einer Fügeverbindung, insbesondere einer Schweißverbindung, werden die zu verbindenden Werkstücke bevorzugterweise im Bereich der Fügestelle mit Fasen oder Absätzen versehen, es erfolgt somit eine Nahtvorbereitung, ähnlich wie beim Schmelzschweißen. Bei dünneren Materialien der Werkstücke kann erfindungsgemäß das Verfahren auch mit einer Stumpfstoßverbindung ohne Anfasen der Werkstücke hergestellt werden, indem eine Auftragsraupe aus dem Material des Fügeelements den Stoß einseitig oder beidseitig überbrückt.

Bei dickeren Werkstücken wird bevorzugterweise durch Anfasen eine I-, U-, V- oder Doppel-V-förmige Fuge oder ein T-Stoß erzeugt. Die Werkstücke werden dann durch Spannelemente, durch Formschluss oder durch Heftschweißungen zueinander fixiert. Erfindungsgemäß wird die Fuge nachfolgend durch das Einquetschen oder Einpressen des Materials des Fügeelements aufgefüllt oder es wird eine Kehlnaht erzeugt.

Erfindungsgemäß kann das Material des Fügeelements gleichartig oder artfremd zu dem Material der Werkstücke sein. Es ist auch möglich, Werkstücke aus unterschiedlichem Material mittels des erfindungsgemäßen Fügeverfahrens zu verbinden.

Die Relativbewegung des Fügeelements relativ zu den Werkstücken kann erfindungsgemäß so realisiert werden, dass das Fügeelement als rotierender Stab oder rotierende Scheibe ausgebildet ist. Es ist auch möglich, das Fügeelement feststehend zu haltern und die Werkstücke zu bewegen, beispielsweise, wenn diese rohrförmig oder stabförmig ausgebildet sind. In jedem Falle wird eine ausreichende Menge an Material des Fügeelements nachgeführt, um einen ausreichenden Auftrag von Material des Fügeelements sicherzustellen.

Erfindungsgemäß kann die Relativbewegung auch durch eine Wellenform oder Orbitalform mit einem rotierenden Fügeelement um ein feststehendes Werkstück erfolgen. Auch eine oszillierende Bewegung in Längsrichtung des Bereichs der Fügestelle ist erfindungsgemäß möglich.

Durch das erfindungsgemäß vorgesehene Aufquetschen oder Aufpressen des plastifizierten, vorerwärmten Materials des Fügeelements entsteht somit eine Fügeverbindung, ähnlich einer Pressschweißverbindung.

In besonders günstiger Weiterbildung der Erfindung ist vorgesehen, dass das erfindungsgemäße Verfahren mehrfach wiederholt wird, um mehrere Lagen des Materials des Fügeelements aufzubringen/einzubringen. Um eine breite Nahtfuge aufzufüllen, kann es günstig sein, das Fügeelement mit einer Pendelbewegung quer zur Fuge zusätzlich zu seiner Vorschubbewegung zu bewegen.

Bei dem erfindungsgemäßen Fügeverfahren ist darauf zu achten, dass die Wärmeführung der Werkstücke und des Fügeelements vor und während des Fügevorgangs richtig erfolgt. Dabei ist die Temperatur des Fügeelements höher als die Temperatur des Bereichs der Fügestelle der Werkstücke, da das Fügeelement gemäß der Erfindung durch eine externe Vorwärmung auf eine Fügetemperatur vorerwärmt wird. Um Wärmeverluste zu kompensieren und um eine exakte Temperaturführung sicherzustellen, kann es besonders vorteilhaft sein, die Werkstücke insbesondere im Bereich der Fügestellen, sowie das Fügeelement sowohl vor als auch während des Fügevorganges zu erwärmen. Hierdurch wird sichergestellt, dass die Werkstoffe der Werkstücke und des Fügeelements unter dem Anpressdruck miteinander eine Fügeverbindung, insbesondere eine Pressschweißverbindung, eingehen. Die zusätzliche Erwärmung während des Fügevorgangs kann durch externe, zusätzliche Wärmequellen erfolgen; es ist auch möglich, die Wärmezufuhr durch einen Reibvorgang, beispielsweise durch Reibbacken am Fügeelement und/oder durch Reiben des Werkstückes durch ein Reibwerkzeug während des Fügeverfahrens zwischen dem plastifizierten Material des Fügeelements und dem vorgewärmten Bereich der Werkstücke vorzusehen.

Bei dem erfindungsgemäßen Fügeverfahren erweist es sich als besonders vorteilhaft, dass weder das Material des Fügeelements noch die Materialien der Werkstücke auf eine Schmelztemperatur erwärmt werden müssen. Hierdurch ergibt sich eine geringere Wärmebelastung. Weiterhin wird das Gefüge insbesondere der Werkstücke, welches üblicherweise ein Umformgefüge ist, nicht oder nur unwesentlich beeinträchtigt. Zusätzlich ergibt sich ein geringerer Verzug durch den Fügevorgang, so dass auf ein nachträgliches Richten oder Kalibrieren verzichtet werden kann.

Mittels des erfindungsgemäßen Fügeverfahrens ist es möglich, Werkstoffe zu fügen, die mit herkömmlichen Schweißverfahren nicht verbindbar sind.

Ein weiterer Vorteil des erfindungsgemäßen Verfahrens ergibt sich daraus, dass Zwangslagen problemlos fügbar sind, da das durch das Fügeelement zugeführte Material nicht wegfließen oder abtropfen kann.

Das zu verwendende Fügeelement, welches stabförmig, scheibenförmig oder in ähnlicher Weise ausgebildet sein kann, ist kostengünstig herstellbar. Es kann bei dem erfindungsgemäßen Verfahren auf zusätzliche Flussmittel oder zusätzliche Abdeckmaterialien verzichtet werden. Somit entfällt üblicherweise auch das Problem der beim Schmelzschweißen auftretenden Schlacke, die zum einen entfernt werden muss und zum anderen die Gefahr von Einschlüssen bildet. Auch auf die Verwendung von Schutzgasen kann vielfach verzichtet werden.

Erfindungsgemäß können durch die gezielte Wärmesteuerung mit externen Wärmequellen auch Materialien des Fügeelements (Zusatzmaterialien mit sehr unterschiedlichen Materialeigenschaften) gefügt bzw. verschweißt werden.

Im Vergleich zu einem üblichen Pressschweißverfahren kann durch das erfindungsgemäße Fügeverfahren auf aufwendige Staucheinrichtungen verzichtet werden. Es entsteht somit kein Stauchwulst, der nachbearbeitet werden müsste. Eine Nahtüberhöhung kann durch den Materialauftrag durch das Fügeelement in gewünschter Weise aufgebracht werden.

Mit dem erfindungsgemäßen Verfahren ist es möglich, beliebig dicke Fügeverbindungen (Schweißverbindungen) durch mehrlagiges Aufbringen des Materials des Fügeelements zu realisieren.

Erfindungsgemäß ist es auch möglich, anstelle eines Fügeelements mehrere derartiger Fügeelemente vorzusehen, um beispielsweise dickere Materiallagen aufzubringen. Dabei können die mehreren Fügeelemente aus dem gleichen oder aus unterschiedlichem Material bestehen.

Im Folgenden wird die Erfindung anhand von Ausführungsbeispielen in Verbindung mit der Zeichnung beschrieben. Dabei zeigt:
- Fig. 1: eine schematische Darstellung zweier Werkstücke sowie eines Fügeelements in einer Ausgangsposition,
- Fig. 2: eine Anordnung, analog Fig. 1, mit einer ersten aufgebrachten Lage aus Fügematerial,
- Fig. 3: eine Darstellung, analog den Fig. 1 und 2, zur Aufbringung einer zweiten Lage aus Fügematerial,
- Fig. 4: eine Darstellung, analog Fig. 3, mit aufgebrachter zweiter Lage aus Fügematerial,
- Fig. 5: eine Darstellung eines abgewandelten Ausführungsbeispiels mit Relativbewegung der Werkstücke,
- Fig. 6: eine Darstellung, analog Fig. 5, mit Aufbringung einer ersten Lage aus Fügematerial,
- Fig. 7: eine Darstellung, analog Fig. 6, mit Aufbringung einer weiteren Lage aus Fügematerial,
- Fig. 8: ein Ausführungsbeispiel, analog Fig. 5, mit scheibenförmigem Fügeelement,
- Fig. 9: ein Ausführungsbeispiel mit einer Stumpf-Stoß-Verbindung mit überlappender Lage aus Fügematerial,
- Fig. 10: ein Ausführungsbeispiel mit einer T-Stoß-Verbindung mit rotierendem oder oszillierendem Fügeelement,
- Fig. 11: eine schematische Darstellung eines weiteren Ausführungsbeispiels mit zusätzlichem Reibelement,
- Fig. 12: eine Darstellung analog Fig. 11 mit aufgetragener Schweißraupe,
- Fig. 13: ein weiteres Ausführungsbeispiel mit vorlaufendem Reibelement,
- Fig. 14: ein Diagramm zur Temperaturabhängigkeit der Streckgrenze eines Fügematerials,
- Fig. 15: ein Schliffbild eines Ausführungsbeispiels einer Schweißverbindung von S235 auf Aluminium,
- Fig. 16: ein Schliffbild von VA auf Aluminium,
- Fig. 17: ein Schliffbild von 100 Cr6 auf Aluminium (geätzt), und
- Fig. 18: ein Schliffbild des Gefüges von Grundmaterial und aufgetragener Schweißraupe.

In den nachfolgenden Ausführungsbeispielen werden gleiche Teile mit gleichen Bezugsziffern versehen.

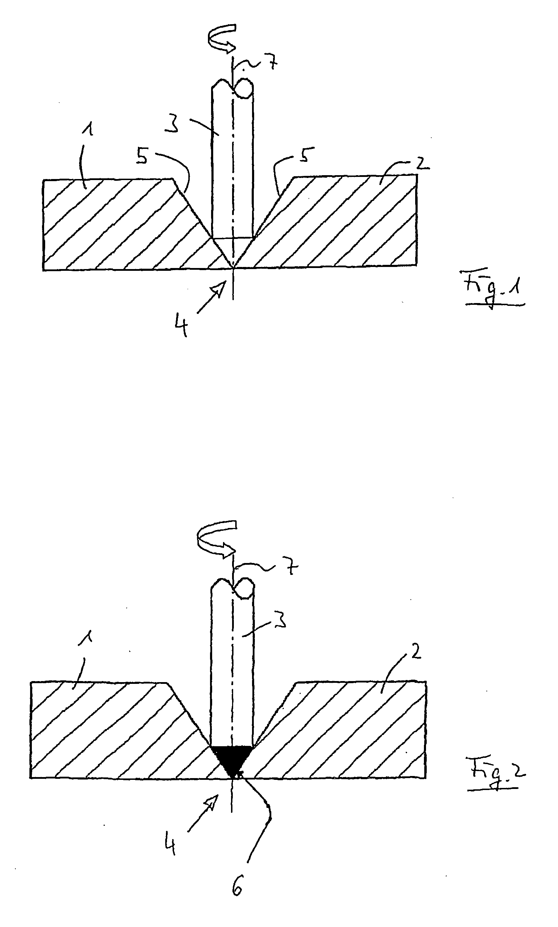

Die Fig. 1 zeigt Werkstücke 1 und 2, welche nebeneinander angeordnet sind, um eine Fügestelle 4 zu bilden. Die Kanten der Werkstücke 1 und 2 sind jeweils mit einer Fase 5 versehen.

Bei dem in Fig. 1 gezeigten Ausführungsbeispiel ist ein Fügeelement 3 stabförmig ausgebildet. Eine Relativbewegung des Fügeelements 3 ist durch den Pfeil in Fig. 1 dargestellt. In Fig. 2 wird zur Aufbringung einer ersten Lage 6 aus Material des Fügeelements das Fügeelement 3 in die Fügestelle 4 eingedrückt oder eingequetscht. Die hierfür erforderliche Anpresskraft wird insbesondere in Richtung einer Längsachse 7 des Fügeelements 3 aufgebracht. Hierdurch wird das auf eine Plastifizierungstemperatur vorerwärmte Material des Fügeelements 3 in die Fügestelle 4 eingepresst oder eingequetscht.

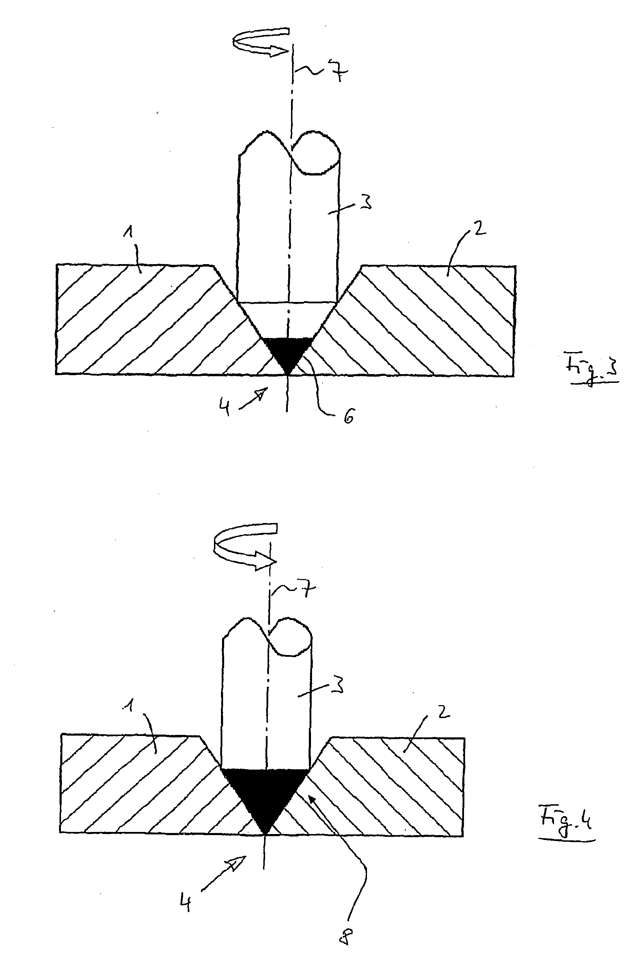

Zur Aufbringung einer zweiten Lage 8 wird, wie in den Fig. 3 und 4 gezeigt, ein Fügeelement 3 verwendet, welches einen größeren Durchmesser aufweist, als das Fügeelement zur Aufbringung der ersten Lage 6 (Fig. 1 und 2). In analoger Weise wird das vorerwärmte, plastifizierte Material des Fügeelements 3 während einer Relativbewegung des Fügeelements 3 auf die Fügestelle 4 aufgequetscht oder aufgedrückt, so dass sich die zweite Lage 8 bildet (siehe Fig. 4). Durch nochmalige Wiederholung des erfindungsgemäßen Verfahrens mit Fügeelementen 3 mit größerem Durchmesser wird die Fügestelle 4 vollständig geschlossen.

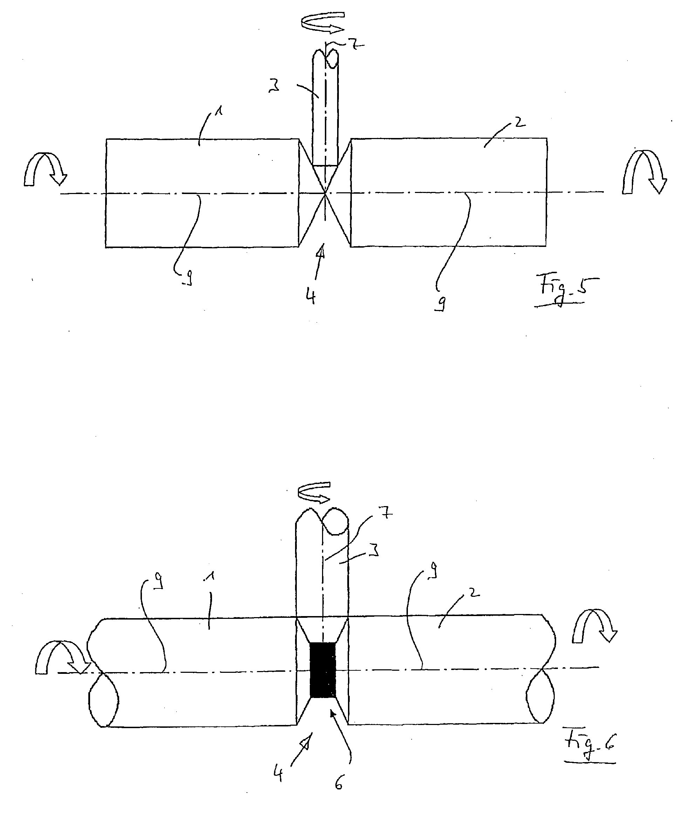

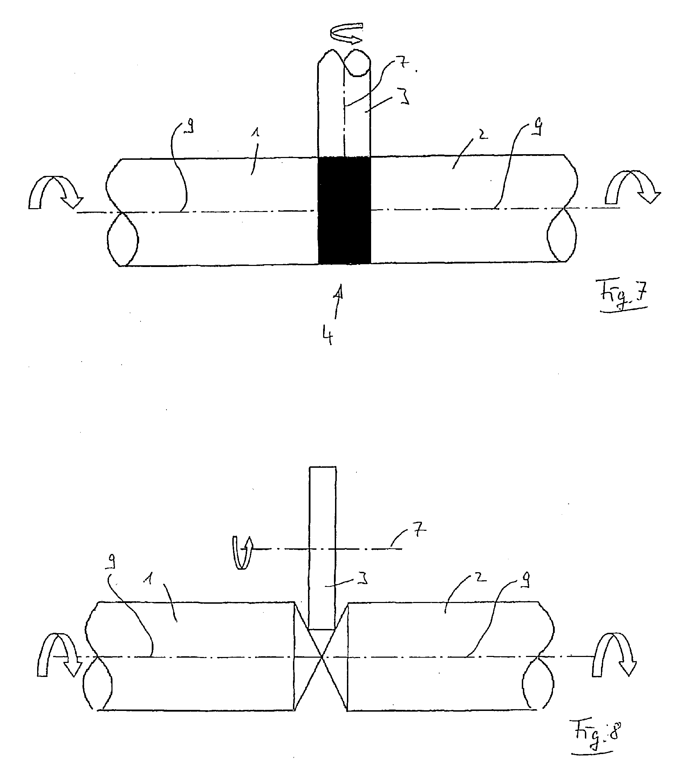

Die Fig. 5 zeigt ein Ausführungsbeispiel, bei welchem die Werkstücke 1, 2 um ihre Längsachse 9 gedreht werden. Diese Drehung erfolgt zusätzlich zu einer Drehung des Fügeelements 3 um dessen Längsachse 7. Somit wird bei stabförmigen Werkstücken 1, 2 die Aufbringung einer ersten Lage 6 aus Material des Fügeelements 3 realisiert (Fig. 6). In einer weiteren Wiederholung des erfindungsgemäßen Verfahrens erfolgt ein vollständiges Schließen der Fügestelle 4 (siehe Fig. 7).

Das in Fig. 8 gezeigte Ausführungsbeispiel zeigt ein scheibenförmiges Fügeelement 3, welches um seine Mittelachse 7 rotiert, so dass sich eine Fügeverbindung analog dem in den Fig. 5 bis 7 gezeigten Ausführungsbeispiel ergibt.

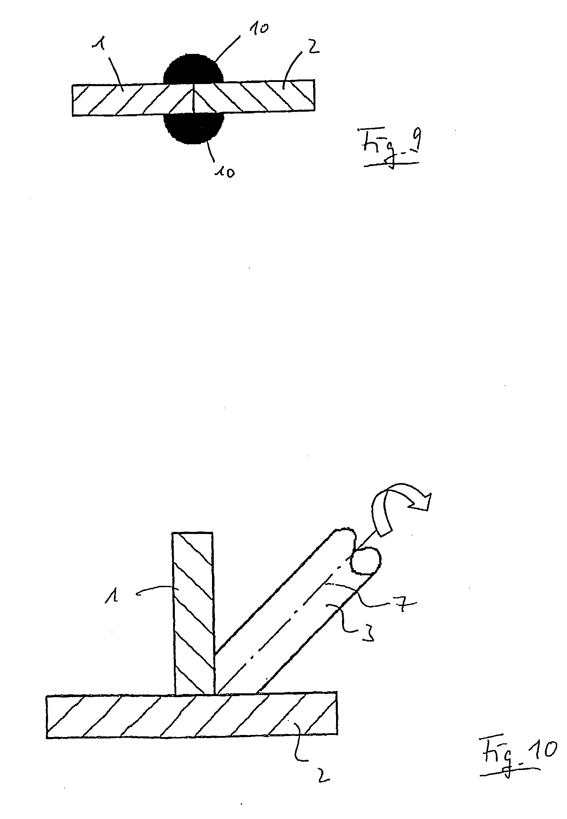

Das in Fig. 9 gezeigte Ausführungsbeispiel zeigt eine Stumpf-Stoß-Verbindung mit überlappender Raupe 10 aus Material des nicht dargestellten Fügeelements. Analog zu der Darstellung in Fig. 9, bei welcher flache Werkstücke 1, 2 gefügt sind, ist es auch möglich, rohrförmige Werkstücke 1, 2 zu fügen.

Die Fig. 10 zeigt eine T-Stoß-Verbindung. Bei diesem Ausführungsbeispiel ist das Fügeelement 3, welches um seine Längsachse 7 rotiert, in einem Winkel zu den die T-Stoß-Verbindung bildenden Werkstücken 1, 2 angeordnet, um eine einlagige oder mehrlagige Kehlnaht auszubilden.

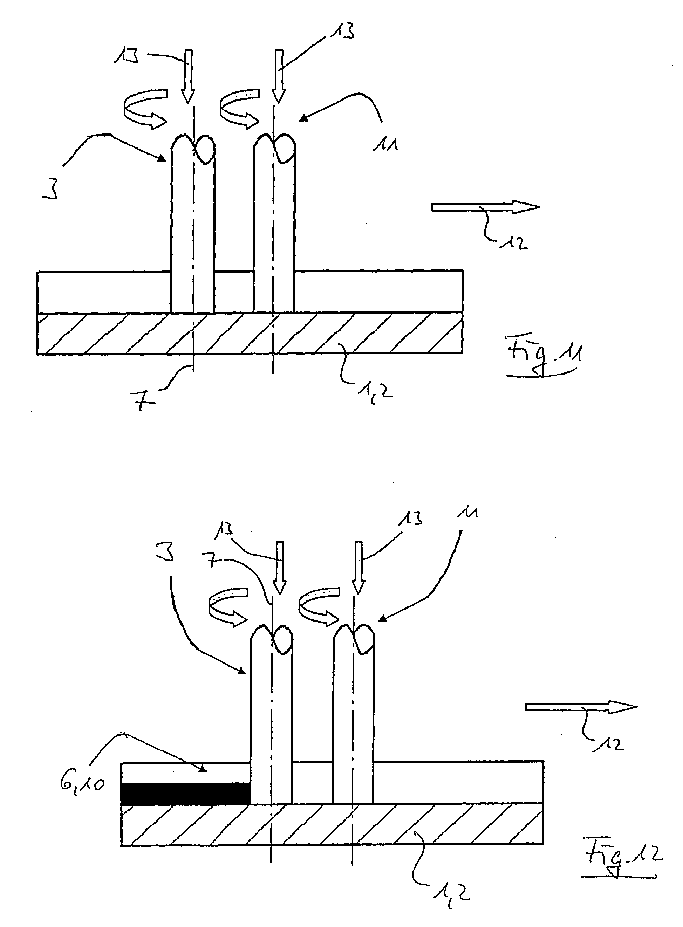

Die Fig. 11 bis 13 zeigen Ausführungsbeispiele, bei welchen vor dem Fügeelement 3 ein zusätzliches Reibelement 11 vorläuft. Bei dem Ausführungsbeispiel der Fig. 11 und 12 ist das Reibelement 11, ebenso wie das Fügeelement 3, stabförmig ausgebildet und rotiert um seine Längsachse, so wie dies durch die Pfeile dargestellt ist. Vorlaufend zu dem Fügeelement 3 ist somit das stabförmige Reibelement 11 vorgesehen, welches durch die Drehung um seine Längsachse Reibungswärme erzeugt. Diese dient zur Vorerwärmung des Werkstücks 1 bzw. 2. Somit kann auf eine externe Vorwärmung des Werkstücks 1, 2 verzichtet werden bzw. somit kann das zusätzliche Reibelement 11 zusätzliche Wärmeenergie einbringen. In den Fig. 11 bis 13 zeigt der Pfeil 12 die Vorschubrichtung.

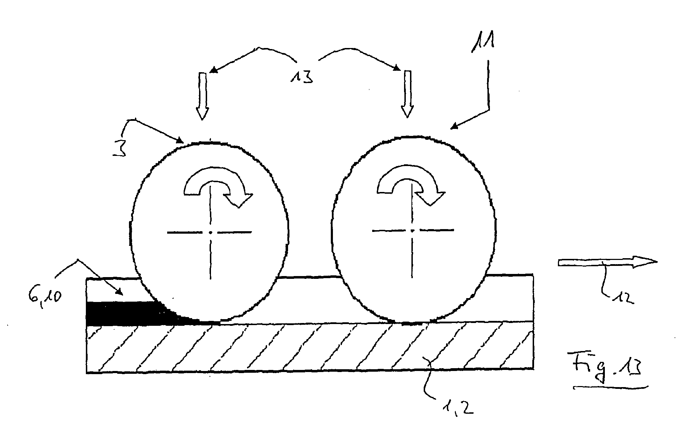

Bei dem in Fig. 13 gezeigten Ausführungsbeispiel ist das Fügeelement 3 scheibenförmig oder walzenförmig ausgebildet (beispielsweise analog zu dem in Fig. 8 gezeigten Ausführungsbeispiel). Auch die Fig. 13 zeigt, dass in Vorschubrichtung 12 vor dem Fügeelement 3 ein scheibenförmiges oder walzenförmiges Reibelement 11 vorgesehen ist, welches sich in Reibkontakt mit dem Werkstück 1 bzw. 2 befindet und dessen Oberfläche erwärmt.

Zusätzlich zeigen die Fig. 11 bis 13 mit den Pfeilen 13 die Aufbringung einer Anpresskraft sowohl auf das Fügeelement 3 als auch auf das zusätzliche Reibelement 11. Durch die Anpresskraft 13 auf das Fügeelement 3 erfolgt ein Aufquetschen oder Aufbringen des plastifizierten Materials des Fügeelements 3.

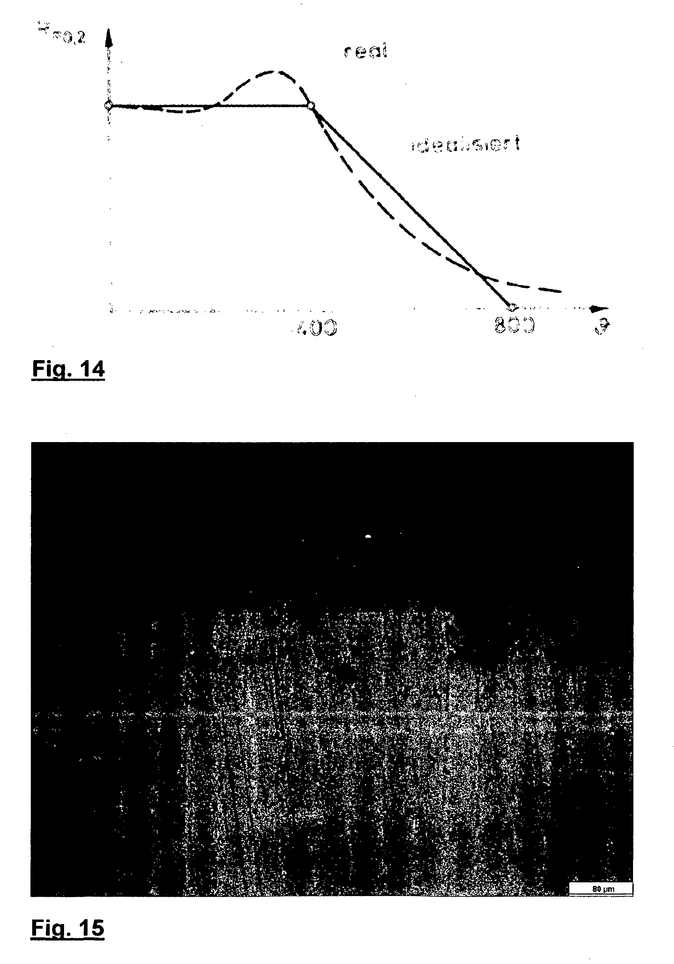

Im Folgenden werden einzelne Beispiele anhand der Fig. 14 bis 18 beschrieben.

Temperaturen zum Verschweißen von Aluminiumwerkstoffen:
Das Temperaturfenster für Aluminiumwerkstoffe liegt zwischen 220 und 360°C und ist abhängig vom Bauteilvolumen der Substrate. Beim Verschweißen von Feinblechen aus AlMgSi0,5 mit einem Zusatzwerkstoff aus AlMgSi0,5 wird das Substrat auf Temperaturen von ca. 220°C induktiv erwärmt. Ein Vorwärmen des Zusatzwerkstoffes findet nicht statt, da die Wärme aus dem Reibprozess und dem warmen Grundmaterial für den Verbindungsprozess ausreicht.

Temperaturen zum Verschweißen von Stahlwerkstoffen:
Das Temperaturfenster für Stahlwerkstoffe liegt bei ca. 800°C. Beim Verschweißen von Feinblechen aus St1203 mit einem Zusatzwerkstoff aus S235JR wurden gute Ergebnisse bei einer Bolzentemperatur von ca. 800°C und ohne Erwärmung des Substrates erzielt. Die Fig. 14 zeigt die Abnahme der Streckgrenze von Stahl mit steigender Temperatur bis zur Plastifizierung bei ca. 800°C.

In den folgenden Tabellen sind die Parameter von Verbindungsbeispielen angegeben, die zu guten Ergebnissen geführt haben:
Reibnahtschweißen von Feinblechen mittels einer I-Naht:
Verbinden von Blechen aus AlMgSi0,5 mit einem Zusatzwerkstoff aus AlMgSi0,5

| t(S) | Ø(B) | n | p | F | v | T(S) | T(B) |
|---|---|---|---|---|---|---|---|
| mm | mm | 1/min | bar | N | mm/min | °C | °C |
| 2 | 12 | 12000 | 2 | 695 | 500 | 220 | 20 |

Verbinden von Blechen aus St1203 mit einem Zusatzwerkstoff aus S235JR

| **t(S)** | **Ø(B)** | **n** | **p** | **F** | **v** | **T(S)** | **T(B)** |
|---|---|---|---|---|---|---|---|
| **mm** | **mm** | **1/min** | **bar** | **N** | **mm/min** | **°C** | **°C** |
| 1 | 10 | 12000 | 5 | 1611 | 300 | 20 | 800 |

- F: Kraft in N
- n: Drehzahl in 1/min
- Ø(B): Durchmesser des Bolzens in mm
- p: Druck in bar
- T(B): Temperatur des Schweißzusatzbolzens in °C
- T(S): Temperatur des Substratmaterials in °C
- t(S): Blechdicke des Substrats in mm
- v: Vorschubgeschwindigkeit in mm/min

Schweißergebnisse beim Verbindungsschweißen von Aluminiumblechen:
Es wurden Bleche aus AlMgSi0,5 mit einer Blechstärke von 2 mm mittels eines bolzenartigen Fügeelements aus AlMgSi0,5 mit einem Bolzendurchmesser von 12 mm verschweißt.

Schweißergebnisse beim Verbindungsschweißen von Stahlblechen:
Es wurden Bleche aus St1203 mit einer Blechstärke von 1 mm mittels eines bolzenartigen Fügeelements aus S235JR mit einem Bolzendurchmesser von 10 mm verschweißt.

Vergleich mit bestehenden Verfahren:
Vergleichbare Verfahren sind das Reibrührschweißen und das in der EP 1 354 660 A1 beschriebene Verfahren, mit dem Bleche mittels einer V-Naht verschweißt werden.

Nachteile des bekannten Reibrührschweißens gegenüber dem erfindungsgemäßen Reibnahtschweißen:
- Es können nur extrudierbare Materialien, beispielsweise Aluminium, Kupfer, Zink, Silber und die Legierungen der genannten Werkstoffe verschweißt werden. Ein Einsatz bei Stahlwerkstoffen ist nicht möglich.
- Bindefehler durch Oxideinschlüsse sind möglich.
- Hohe Fügekräfte und teure Spannvorrichtungen sind erforderlich.
- Beide Seiten der Bleche müssen zugänglich sein.
- Nahezu keine Spaltüberbrückbarkeit, da kein Schweißzusatz verwendet wird.
- Nur bei großen Stückzahlen und bei Sondereinsätzen sinnvoll.

Nachteile des in der EP 1 354 660 A1 beschriebenen Verfahrens gegenüber dem erfindungsgemäßen Reibnahtschweißen mit externer Zuheizung:
- Es werden nur sehr dünne Raupen aufgebracht, da die ganze Schweißwärme aus dem Reibprozess generiert werden muss. Ist das Substratmaterial dicker und leitet viel Wärme ab, so können nur sehr dünne Schweißraupen aufgetragen werden. Mit der erfindungsgemäß externen Zuheizung können dickere Schichten sowohl des Grund- als auch Auftragsmaterials auf die notwendige Plastifizierungstemperatur gebracht werden. Dadurch entstehen bei Bedarf dickere Schweißraupen.
- Die benötigten Temperaturen werden allein über einen schwer regelbaren Reibvorgang erzeugt, dessen hauptsächliche Regelparameter Drehzahl und Anpressdruck sowie Vorschubgeschwindigkeit sind.
- Hoher technologischer Aufwand zur Temperatursteuerung.

Verbesserungen, die das erfindungsgemäße Reibnahtschweißen mit externer Zuheizung gegenüber dem bekannten Reibrührschweißen bietet:
- Es können auch Bleche aus Stahl auch höherer Härte miteinander verschweißt werden, da sie durch die Zusatzerwärmung einstellbar plastifiziert werden können.
- Einfache Ausführung der Spannvorrichtungen.
- Es lassen sich sehr dünne Bleche (<1 mm) verbinden.
- Bleche können mit einem artfremden Zusatzwerkstoff verbunden werden.
- Es können Verbindungen mit dem Überlappstoß erzeugt werden.
- Es lassen sich auch Spalte überbrücken.

Vorteile, die das erfindungsgemäßen Reibnahtschweißen mit externer Zusatzheizung bietet:
- Es lassen sich mehrere Nahtarten realisieren.
- Das Substrat und der Zusatzwerkstoff können getrennt voneinander erwärmt werden.
- Einfache Regelung der Vorwärmtemperatur.

Einen wichtigen erfindungsgemäßen Aspekt stellt die separate zusätzliche Erwärmung von Werkstück und Auftragsmaterial mit jeweils zumindest einer zusätzlichen Wärmequelle zusätzlich zur reinen Erwärmung durch Reibung dar. Das Ziel dabei ist, die beiden Werkstoffe von Grund- und Auftragsmaterial auf ein geeignetes Temperaturniveau zu bringen und das Temperaturniveau während des Beschichtungsvorgangs zu halten, auf dem die beiden Werkstoffe unter Anwendung von Druck eine Schweißverbindung eingehen.

Die gezielte Erwärmung des Auftragswerkstoffes auf Plastifizierungstemperatur ermöglicht einen erfindungsgemäßen Auftrag des Zusatzwerkstoffes auf das Grundmaterial. Bei einer fehlerhaften Wärmeführung kann es zu einem Auftragen des Grundmaterials auf den Zusatzwerkstoff kommen, sodass keine Schweißverbindung zustande kommt, sondern eine Beschichtung des Auftragsmaterials mit dem Grundwerkstoff stattfindet. Durch die zusätzliche Relativbewegung, die rotierend oder oszillierend sowie in einer Kombination von Rotation und Oszillation erfolgen kann, wird das Schweißgut auf die zu fügenden Teile aufgetragen. Eine gute Haftung des Schweißgutes auf der Oberfläche der zu fügenden Teile ist wesentlich durch eine geregelte, exakte Wärmeführung vor und während des Prozesses bestimmt.

Die notwendige Energie für diese Erwärmung von Grund- und Auftragswerkstoff stammt beim konventionellen Reibschweißen alleine aus dem Reibprozess zwischen Werkstück und Auftragsmaterial. Dieser Reibprozess wird im Wesentlichen durch die Drehzahl oder Oszillationsfrequenz, die Anpresskraft und die Reibwerte zwischen Grund- und Auftragsmaterial wie Reibungskoeffizient und Oberflächenrauhigkeit bestimmt.

Für den Abfluss der eingebrachten Wärme sind Wärmekapazität, Wärmeleitfähigkeit, Dicke der Fügeteile, Vorschubgeschwindigkeit, Kühlung des Auftragswerkstoffes und Grundmaterials durch den Luftzug bei hohen Drehzahlen des Auftragsmaterials verantwortlich.

Ändern sich diese Werte während des Schweißprozesses z.B. durch zu starkes Plastifizieren des Grundwerkstoffes, so sinkt die entstehende Reibenergie. Dadurch kommt es dann zu einem Abkühlen des Auftragsmaterials unter die notwendige Plastifizierungstemperatur und damit zu einer Unterbrechung des Auftragsprozesses. Als Beispiel dafür ist das erfindungsgemäß durchgeführte Auftragen von Schweißraupen aus verschiedenen Stählen (S235, VA, 100Cr6) auf Aluminium zu nennen, das mit den bisherigen Verfahren nicht möglich war und mit der erfindungsgemäßen Zuwärmung vor und während des Schweißprozesses erfolgreich durchgeführt werden konnte.

Ohne die zusätzliche Erwärmung des härteren Zusatzmaterials in diesen Beispielen würde das Stahlmaterial sich beim Reibvorgang in das weichere Aluminium bohren, aber keine Auftragsraupe erzeugen.

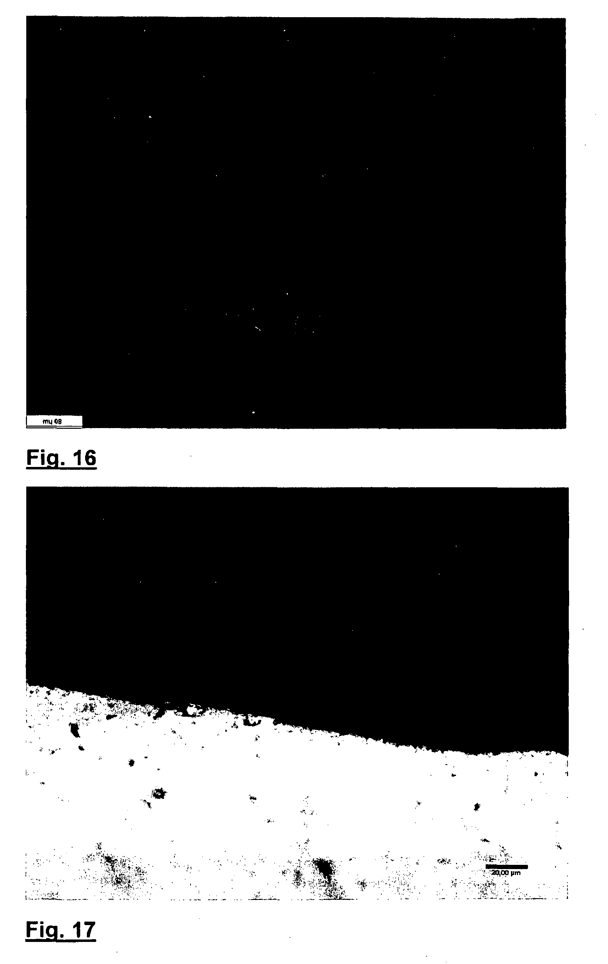

Die Fig. 15 bis 17 zeigen jeweils Schliffbilder der erzeugten Schweißverbindungen. Die Fig. 15 zeigt eine Schweißverbindung von S235 auf Aluminium, die Fig. 16 zeigt eine Schweißverbindung von VA auf Aluminium, die Fig. 17 zeigt eine Schweißverbindung von 100 Cr6 auf Aluminium (geätzt).

Einfluss der Reibwerte von Grund- und Auftragsmaterial auf den Schweißprozess: Sind die Reibwerte schon zu Beginn des Auftragsvorganges gering, wie das bei Materialien mit guter Fließfähigkeit oder guten Gleiteigenschaften (Grauguss, Lagerbronze, Messing) der Fall ist, so kommt bei der aus dem Stand der Technik bekannten Vorgehensweise kein Reibauftrag zustande, da nicht ausreichend Wärme aus dem Reibprozess generiert wird.

Ein reines Vorwärmen ist z.B. bei diesen Anwendungen nur bedingt erfolgreich, da speziell bei dickeren Fügeteilen soviel Wärme abfließt, dass ein möglicherweise anfangs erfolgreicher Schweißprozess nach kurzer Schweißstrecke zum Stillstand kommt. Nur eine kontrollierte, geregelte zusätzliche Wärmezufuhr zu Grund- und Zusatzwerkstoff, wie erfindungsgemäß vorgesehen, hält den Schweißprozess auf der notwendigen Prozesstemperatur.

Ein weiterer Vorteil der zusätzlichen geregelten Erwärmung von Grund- und Zusatzmaterial liegt in der wahlweisen Erzeugung von dicken oder dünnen Auftragsraupen. Wird das Auftragsmaterial durch mehr Wärme stärker und über eine größere Materialstärke plastifiziert, so kann in einem Durchgang mehr Material aufgetragen werden. Die Dicke der Raupe ist dann über die Vorschubgeschwindigkeit und die zugeführte Wärme steuerbar. So lassen sich mit dem erfindungsgemäßen Verfahren deutlich höhere Schweißgeschwindigkeiten oder dickere Nahtlagen erzielen.

### Gefügebeeinflussung:

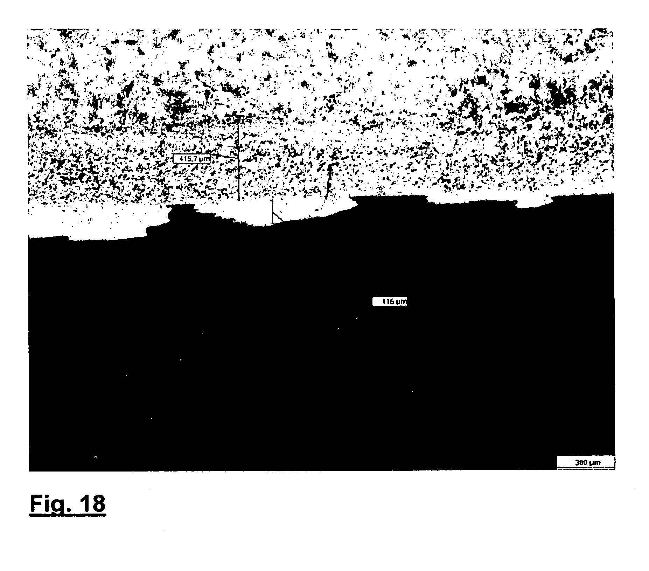

Als vorteilhaft erweist sich die erfindungsgemäße separate Wärmezufuhr, wenn es um die Beeinflussung des Nahtgefüges geht. So kann über die gezielte Wärmeführung, kombiniert mit dem Rührprozess des erfindungsgemäßen Verfahrens, ein feinkörniges Nahtgefüge erzeugt werden oder eine unerwünschte Martensitbildung unterbunden werden. Veranschaulicht wird das durch das Nahtgefüge einer Naht aus S235 auf S235-Blech, bei dem das Nahtgefüge deutlich feiner als das des Grundmaterials ist, so wie dies in Fig. 18 dargestellt ist. Der obere Bereich des Schliffbildes zeigt das Grundmaterial des Werkstücks, nämlich gewalztes Blech S235. Daran anschließend ist ein feinkörniges Gefüge der Schweißnaht aus S235 ersichtlich.

Bei Mehrlagenschweißungen kann es aufgrund zu geringer Erwärmung der benachbarten Schweißraupen durch den reinen Reibprozess zu Bindefehlern zwischen den einzelnen Nahtlagen kommen. Diese lassen sich erfindungsgemäß durch eine ausreichende Erwärmung der Umgebung der entstehenden neuen Schweißraupe vermeiden, da es dann im Randbereich zwischen neuer und vorhandener Schweißraupe zu einem Vermengen des Schweißgutes im plastischen Bereich kommt.

### Geregelte Wärmeführung bei dicken Werkstücken:

Die geregelte Wärmezuführung zusätzlich zum Reibprozess erlaubt es erfindungsgemäß, lokale Schweißungen an dicken Werkstücken vorzunehmen, bei denen normalerweise zuviel Wärme abgeleitet wird, als dass eine gute Schweißverbindung zustande kommt. Beispielhaft dafür ist das Auffüllen von Lunkern an Gussteilen, indem sie angebohrt und die Bohrung durch eine Reibpunktschweißung mit geregelter Wärmeführung aufgefüllt wird.

Wie die Beschreibung der Erfindung und insbesondere die Beschreibung der Vergleichsbeispiele zeigen, ergeben sich für die erfindungsgemäße Wärmeführung folgende Aspekte:
- Es sind deckende Schichten neben- und übereinander möglich. Durch die Erfindung kann eine Miterwärmung der benachbarten Raupen und eine Vermischung erfolgen.
- Es ist ein gleichmäßiger Auftrag mit besserer Bindung von Hartschichten auf Aluminium möglich, wobei sich beispielsweise Baustahl auf Aluminium auftragen lässt. Durch die Erfindung sind gleichmäßige und bindende Raupen umsetzbar, sogar mit 1,3505 (100Cr6).
- Es sind höhere Vorschubwerte entlang des Substrats möglich. Erfindungsgemäß wird der Plastizitätsbereich wesentlich schneller erreicht und aufrechterhalten, wodurch sehr hohe, beispielsweise im Vergleich zum Stand der Technik doppelte Vorschubwerte möglich sind. Diese können noch bei 150 mm/min mit einer Schichtdicke von 1 bis 1,5 mm realisiert werden.
- Es sind Materialkombinationen verschweißbar, bei denen der Reibkoeffizient zu niedrig ist, als dass genügend Reibwärme zur Plastifizierung des Auftragsmaterials generiert wird. Als Beispiel ist 100Cr6 auf Aluminium anzuführen.
- Es erfolgt eine gezielte Gefügeeinstellung von Substrat und Auftragsmaterial während und nach dem Prozess. Nach dem Prozess kann ein zu schnelles Abkühlen verhindert werden. Somit können unerwünschte Gefügeänderungen (zu starke Aufhärtungen) des Substrats verhindert werden. Während und vor dem Prozess können Gefüge eingestellt werden, die sich besser verbinden lassen, beispielsweise eine Austenitisierungstemperatur beider Werkstoffe anstreben.
- Erfindungsgemäß sind durch passende Wärmeführung dicke oder dünne Schweißraupen herstellbar.
- Erfindungsgemäß sind Materialien mit hoher Wärmeleitfähigkeit und hoher Wärmekapazität durch dauernde Zuführung von Wärme schweißbar.
- Beim Beschichten kann das Material so weich gehalten werden, dass Zusatzstoffe wie Hartstoffe in die Naht eingebracht werden können.

### Bezugszeichenliste

- 1, 2: Werkstück
- 3: Fügeelement
- 4: Fügestelle
- 5: Fase
- 6: erste Lage
- 7: Längsachse / Achse / Mittelachse
- 8: zweite Lage
- 9: Längsachse
- 10: Raupe
- 11: Reibelement
- 12: Vorschubrichtung
- 13: Anpresskraft

## Patentansprüche

1. Verfahren zum Fügen von zumindest zwei Werkstücken (1, 2) mit folgenden Verfahrensschritten in der folgenden Reihenfolge:
- Bereitstellen und Positionieren der zu fügenden Werkstücke (1, 2),
- Bereitstellen von zumindest einem Fügeelement (3), **gekennzeichnet durch**:
- Erwärmen des Fügeelements (3) auf eine im Wesentlichen seiner Plastifizierungstemperatur gleiche Temperatur mittels zumindest einer externen Wärmequelle,
- Erwärmen der Werkstücke (1, 2) zumindest im Bereich einer Fügestelle (4) auf eine vorgegebene Reaktionstemperatur, und
- Aufbringen von Material des Fügeelements (3) auf den Bereich der Fügestelle (4) unter einer Relativbewegung zwischen dem Fügeelement (3) und dem Bereich der Fügestelle (4).

2. Verfahren nach Anspruch 1, **dadurch gekennzeichnet, dass** das Fügeelement (3) zur Plastifizierung auf eine höhere Temperatur erwärmt wird, als der Bereich der Fügestelle (4).

3. Verfahren nach Anspruch 1 oder 2, **dadurch gekennzeichnet, dass** das Erwärmen des Fügeelements (3) und/oder der Fügestelle (4) durch Reibwärme und/oder Induktionswärme und/oder Heizflammenwärme und/oder Lichtbogenwärme und/oder Widerstandswärme und/oder Laserstrahlen und/oder Elektronenstrahlen und/oder Ultraschallerwärmung und/oder Heißgaserwärmung und/oder Schmorkontakte erfolgt.

4. Verfahren nach einem der Ansprüche 1 bis 3, **dadurch gekennzeichnet, dass** das Material des Fügeelements (3) durch einen Reibvorgang auf und/oder in den Bereich der Fügestelle (4) aufgebracht und/oder eingebracht wird.

5. Verfahren nach einem der Ansprüche 1 bis 4, **dadurch gekennzeichnet, dass** der Verfahrensschritt des Aufbringens oder Einbringens des Materials des Fügeelements (3) in die Fügestelle (4) mehrfach wiederholt wird.

6. Verfahren nach einem der Ansprüche 1 bis 5, **dadurch gekennzeichnet, dass** das Fügeelement (3) und/oder zumindest der Bereich der Fügestelle (4) während des Fügevorgangs erwärmt werden.

7. Verfahren nach einem der Ansprüche 1 bis 6, **dadurch gekennzeichnet, dass** das Aufbringen des Materials des Fügeelements (3) auf den Bereich der Fügestelle (4) unter Aufbringen einer Anpresskraft (13) erfolgt.

8. Verfahren nach einem der Ansprüche 1 bis 7, **dadurch gekennzeichnet, dass** das Material mehrerer Fügeelemente (3) mit gleichen oder unterschiedlichen Materialien gleichzeitig oder nacheinander auf und/oder in den Bereich der Fügestelle (4) aufgebracht und/oder eingebracht wird.

9. Verfahren nach einem der Ansprüche 1 bis 8, **dadurch gekennzeichnet, dass** der Bereich der Fügestelle (4) zumindest eines der zu fügenden Werkstücke (1, 2) vorbearbeitet, insbesondere angefast wird.

10. Verfahren nach einem der Ansprüche 1 bis 9, **dadurch gekennzeichnet, dass** zwischen dem Fügeelement (3) und den Werkstücken (1, 2), insbesondere im Bereich der Fügestelle (4) ein Druck (13) aufgebracht wird und/oder dass das Fügeelement (3) mit einer Pressschweißkraft gegen die Werkstücke (1, 2) vorgespannt wird und/oder dass das Werkstück (1, 2) mittels zumindest eines vorlaufenden Reibelements (11) erwärmt wird.

## Claims

1. A method for joining at least two workpieces (1, 2), comprising the following method steps in the following sequence:
- providing and positioning the workpieces (1, 2) to be joined;
- providing at least one joining element (3), **characterized by**:
- heating the joining element (3) to a temperature substantially equal to its plasticizing temperature by means of at least one external heat source;
- heating the workpieces (1, 2) at least in the region of a joint (4) to a predetermined reaction temperature; and
- applying material of the joining element (3) to the region of the joint (4) with a relative movement taking place between the joining element (3) and the region of the joint (4).

2. The method according to claim 1, **characterized in that** the joining element (3) is heated for plasticization to a higher temperature than the region of the joint (4).

3. The method according to claim 1 or 2, **characterized in that** the heating of the joining element (3) and/or of the joint (4) is carried out by friction heat and/or induction heat and/or heating-flame heat and/or electric-arc heat and/or resistance heat and/or laser beams and/or electron beams and/or ultrasonic heating and/or hot-gas heating and/or scorching contacts.

4. The method according to any one of claims 1 to 3, **characterized in that** the material of the joining element (3) is applied and/or introduced onto and/or into the region of the joint (4) by way of a friction process.

5. The method according to any one of claims 1 to 4, **characterized in that** the process step of applying or introducing the material of the joining element (4) into the joint (4) is repeated several times.

6. The method according to any one of claims 1 to 5, **characterized in that** the joining element (3) and/or at least the region of the joint (4) are heated during the joining operation.

7. The method according to any one of claims 1 to 6, **characterized in that** the material of the joining element (3) is applied to the region of the joint (4) by applying a contact pressing force (13).

8. The method according to any one of claims 1 to 7, **characterized in that** the material of a plurality of joining elements (3) with the same or different materials is applied and/or introduced simultaneously or successively onto and/or into the region of the joint (4).

9. The method according to any one of claims 1 to 8, **characterized in that** the region of the joint (4) of at least one of the workpieces (1, 2) to be joined is preprocessed, particularly beveled.

10. The method according to any one of claims 1 to 9, **characterized in that** a pressure (13) is applied between the joining element (3) and the workpieces (1, 2) particularly in the region of the joint (4), and/or that the joining element (3) is urged with a pressure welding force against the workpieces (1, 2) and/or that the workpiece (1, 2) is heated by means of at least one advancing friction element (11).

## Revendications

1. Procédé dévolu à l'assemblage d'au moins deux pièces (1, 2) et incluant, dans l'ordre séquentiel ci-après, les étapes opératoires suivantes :
- apprêtage et positionnement des pièces (1, 2) à assembler,
- apprêtage d'au moins un élément d'assemblage (3), **caractérisé par** :
- un chauffage de l'élément d'assemblage (3), à l'aide d'au moins une source de chaleur extérieure, jusqu'à une température pour l'essentiel identique à sa température de plastification,
- un chauffage des pièces (1, 2), au moins dans la région d'une zone d'assemblage (4), jusqu'à une température de réaction préétablie, et
- un dépôt de matériau de l'élément d'assemblage (3) sur la région de la zone d'assemblage (4), s'accompagnant d'un mouvement relatif entre ledit élément d'assemblage (3) et ladite région de la zone d'assemblage (4).

2. Procédé selon la revendication 1, **caractérisé par le fait que** l'élément d'assemblage (3) est chauffé, en vue de la plastification, jusqu'à une température supérieure à celle de la région de la zone d'assemblage (4).

3. Procédé selon la revendication 1 ou 2, **caractérisé par le fait que** le chauffage de l'élément d'assemblage (3), et/ou de la zone d'assemblage (4), est exécuté par une chaleur de frottement et/ou une chaleur inductive et/ou une chaleur de flamme chauffante et/ou une chaleur d'arc électrique et/ou une chaleur résistive et/ou par des rayonnements laser et/ou des rayonnements électroniques et/ou par chauffage aux ultrasons et/ou par chauffage aux gaz chauds et/ou par des contacts générateurs de fusion.

4. Procédé selon l'une des revendications 1 à 3, **caractérisé par le fait que** le matériau de l'élément d'assemblage (3) est déposé et/ou introduit, par un processus de frottement, sur et/ou dans la région de la zone d'assemblage (4).

5. Procédé selon l'une des revendications 1 à 4, **caractérisé par le fait que** l'étape opératoire, consistant à déposer ou à introduire le matériau de l'élément d'assemblage (3) dans la zone d'assemblage (4), est réitérée à maintes reprises.

6. Procédé selon l'une des revendications 1 à 5, **caractérisé par le fait que** l'élément d'assemblage (3), et/ou au moins la région de la zone d'assemblage (4), est (sont) chauffé(e)(s) au cours du processus d'assemblage.

7. Procédé selon l'une des revendications 1 à 6, **caractérisé par le fait que** le dépôt du matériau de l'élément d'assemblage (3), sur la région de la zone d'assemblage (4), a lieu avec application d'une force de pression (13).

8. Procédé selon l'une des revendications 1 à 7, **caractérisé par le fait que** le matériau de plusieurs éléments d'assemblage (3), présentant des matériaux identiques ou différents, est déposé et/ou introduit simultanément ou successivement sur et/ou dans la région de la zone d'assemblage (4).

9. Procédé selon l'une des revendications 1 à 8, **caractérisé par le fait que** la région de la zone d'assemblage (4) d'au moins l'une des pièces (1, 2) à assembler est usinée au préalable, notamment chanfreinée.

10. Procédé selon l'une des revendications 1 à 9, **caractérisé par le fait qu'**une pression (13) est exercée entre l'élément d'assemblage (3) et les pièces (1, 2), en particulier dans la région de la zone d'assemblage (4) ; et/ou que ledit élément d'assemblage (3) est précontraint contre lesdites pièces (1, 2) par une force de soudage par compression ; et/ou que la pièce (1, 2) est chauffée à l'aide d'au moins un élément (11) à effet de frottement, situé en tête.
